# EUROPÄISCHE PATENTSCHRIFT

(11) **EP 2 649 290 B1**
(45) Veröffentlichungstag und Bekanntmachung des Hinweises auf die Patenterteilung: **08.06.2016**
(21) Anmeldenummer: 11781813.8
(22) Anmeldetag: 14.11.2011
(51) Int. Cl.: F02F 7/00, F02F 1/00, F04B 53/16, F16J 10/04

(54) **ZYLINDER EINER HUBKOLBENMASCHINE SOWIE HUBKOLBENMASCHINE**
CYLINDER OF A RECIPROCATING PISTON MACHINE AND RECIPROCATING PISTON MACHINE
CYLINDRE D'UN MOTEUR À PISTON ALTERNATIF ET MOTEUR À PISTON ALTERNATIF

(30) Priorität: 10.12.2010 DE 102010054060
(43) Veröffentlichungstag der Anmeldung: 16.10.2013
(60) Teilanmeldung: 14182580.2
(73) Patentinhaber: Geist, Bertwin R., 82547 Eurasburg (DE)
(72) Erfinder: FICHT, Reinhold, 85614 Kirchseeon (DE)
(74) Vertreter: nospat Patent- und Rechtsanwälte GbR
(86) Internationale Anmeldenummer: PCT/EP2011/070037
(87) Internationale Veröffentlichungsnummer: WO 2012/076292

(56) Entgegenhaltungen:
- EP-A1- 0 230 866
- DE-A1- 4 022 705
- DE-A1- 4 301 126
- GB-A- 2 204 658
- JP-U- 57 123 932
- JP-U- 61 145 851
- JP-U- 62 135 845
- US-A- 4 562 799
- US-A- 5 111 869

## Beschreibung

Die vorliegende Erfindung betrifft einen Zylinder einer Hubkolbenmaschine, insbesondere eines Hubkolbenmotors oder eines Hubkolbenkompressors, mit Kurbeltrieb, vorzugsweise mit Kurbelschlaufentrieb, mit zumindest einer in einer Zylinderbohrung des Zylinders angeordneten Zylinderlaufbuchse sowie eine Hubkolbenmaschine mit einem derartigen Zylinder.

Zylinder von Hubkolbenmaschinen bestehen in der Regel aus Gusseisen, z.B. Grauguss, oder, zur Gewichtsersparnis, aus Leichtmetall-Legierungen, z.B. Aluminiumlegierungen. Die Herstellung der Zylinder erfolgt durch Gießen, insbesondere im Sand- oder Druckguss. Da die Innenflächen der in den Zylindern vorgesehenen Zylinderbohrungen materialbedingt oft nicht den an Zylinderlaufflächen gestellten tribologischen Anforderungen genügen, ist es üblich, Zylinderlaufbuchsen in den Zylinderbohrungen vorzusehen.

Gemäß der DE 103 24 279 A1 bestehen die Zylinderlaufbuchsen beispielsweise aus einem Aluminium-Werkstoff, Grauguss oder keramischem Material und sind in ein Kurbelgehäuse eingegossen. Insbesondere in Grauguss-Gehäuse können die Zylinderlaufbuchsen gemäß der DE 103 24 279 A1 auch eingepresst statt eingegossen sein.

Aus der WO 2005 /037463 A3 ist ein Verfahren zur Anbindung einer Zylinderlaufbuchse aus Grauguss, Stahl, Aluminium oder einer Aluminiumlegierung in einen Zylinderblock bekannt, bei dem auf die Zylinderlaufbuchse außenseitig eine Oberflächenbeschichtung auf Basis einer Aluminiumlegierung mit einer Oberflächenrauheit von mindestens 200 µm aufgebracht wird. Anschließend wird die Zylinderlaufbuchse in einer Gussform angeordnet und mit geschmolzenem Aluminium umgossen.

Die DE 32 00 549 A1 offenbart einen Brennkraftmotor mit einem Zylinderblock und darin angeordneten Zylinderlaufbuchsen, die aus gesintertem Siliciumcarbid bestehen können.

DE 41 22 705 A offenbart eine Maschine mit einem Zylinderblock und keramischen Zylinderlaufbüchsen, die in Bohrungen im Zylinderblock gepaßt sind.

Aufgabe der vorliegenden Erfindung ist die Bereitstellung eines Zylinders einer Hubkolbenmaschine, insbesondere eines Hubkolbenmotors oder eines Hubkolbenkompressors, mit Kurbeltrieb, vorzugsweise mit Kurbelschlaufentrieb, mit zumindest einer in einer Zylinderbohrung angeordneten Zylinderlaufbuchse, bei dem eine dauerhafte, axiale und verdrehsichere Lagerung der Zylinderlaufbuchse im Zylinder auch im Betrieb der Hubkolbenmaschine gewährleistet ist. Weitere Aufgabe der Erfindung ist die Bereitstellung einer Hubkolbenmaschine, insbesondere eines Hubkolbenmotors, mit Kurbeltrieb, vorzugsweise mit Kurbelschlaufentrieb mit zumindest einem derartigen Zylinder.

Diese Aufgaben werden durch die Merkmale des Anspruchs 1 und 17 gelöst. Vorteilhafte Weiterbildungen der Erfindung sind in den jeweiligen Unteransprüchen gekennzeichnet.

Im Folgenden wird die Erfindung anhand einer Zeichnung beispielhaft näher erläutert. Es zeigen:
- Figur 1:: Stark vereinfacht eine perspektivische Ansicht eines Zylindermantels eines Zylinders gemäß einer ersten Ausführungsform der Erfindung
- Figur 2:: Einen Längsschnitt des Zylindermantels gemäß Fig. 1
- Figur 3:: Einen Längsschnitt des Zylindermantels gemäß Fig. 1 mit darin angeordneter Zylinderlaufbuchse
- Figur 4:: Schematisch einen Querschnitt durch einen Gewindegang eines Gewindes des Zylindermantels gemäß Fig. 1
- Figur 5:: Stark vereinfacht einen Längsschnitt eines Zylindermantels eines Zylinders nicht Bestandteil der Erfindung mit Zylinderlaufbuchse
- Figur 6:: Stark vereinfacht einen Längsschnitt eines Zylindermantels eines Zylinders gemäß einer weiteren Ausführungsform der Erfindung mit Zylinderlaufbuchse
- Figur 7:: Stark vereinfacht einen Längsschnitt eines Zylindermantels eines Zylinders gemäß einer weiteren Ausführungsform der Erfindung mit Zylinderlaufbuchse
- Figur 8:: Vereinfacht eine perspektivische Ansicht eines Teils eines Kurbelschlaufentriebs

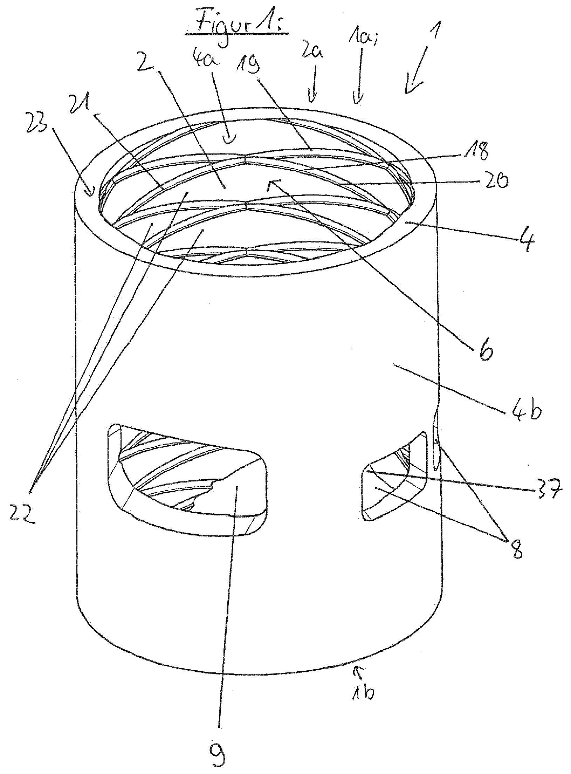

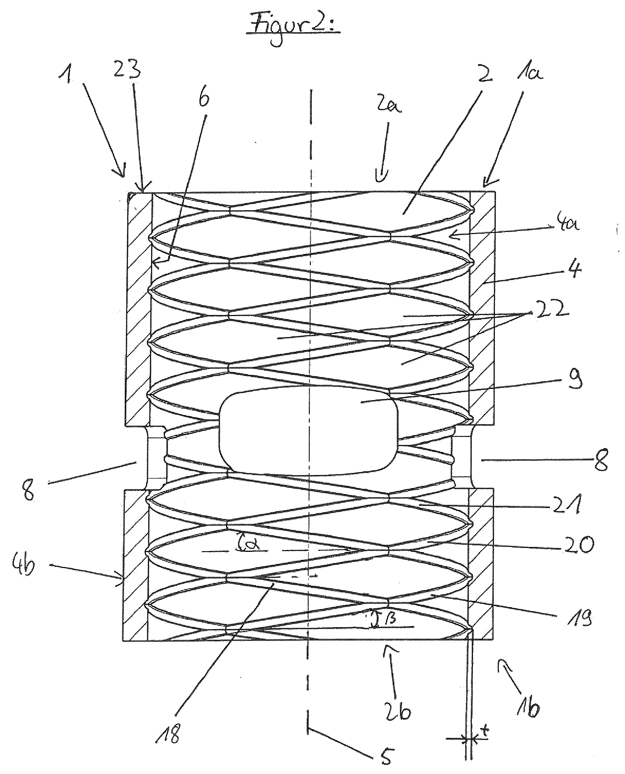

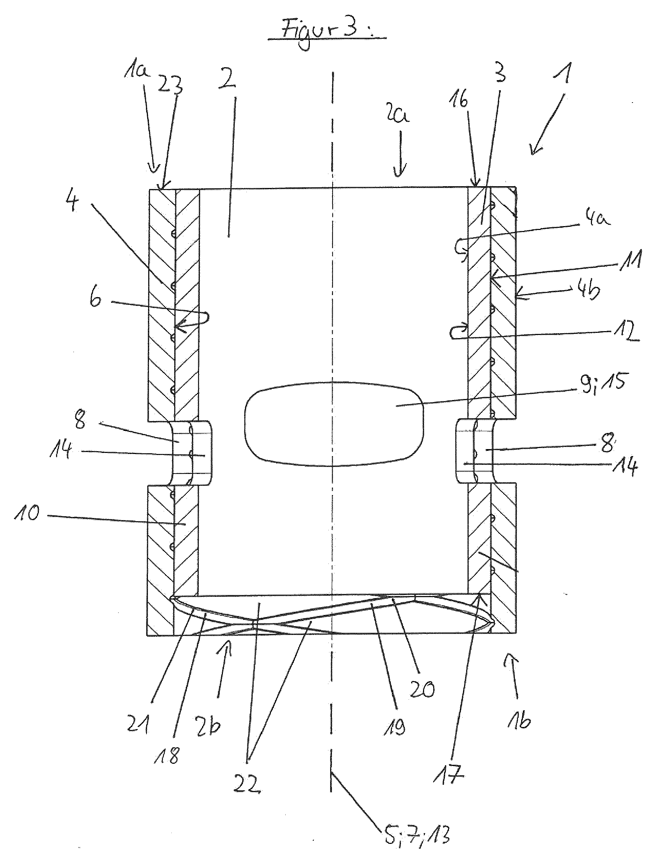

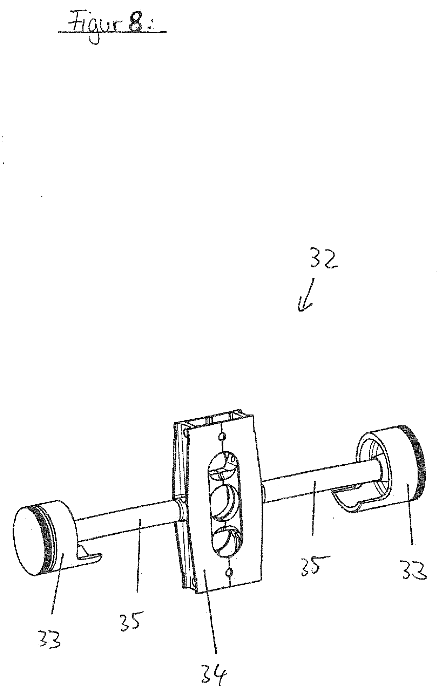

Der erfindungsgemäße Zylinder weist einen Zylindermantel 1 (Fig. 1-7) mit einer Zylinderbohrung 2 und eine darin angeordnete bzw. gelagerte Zylinderlaufbuchse bzw. einen Zylinderliner 3 (Fig. 3,5-7) auf. In der Zylinderlaufbuchse 3 ist in an sich bekannter Weise jeweils ein Kolben 33 (Fig. 8) auf- und ab beweglich geführt. Und an einem ersten, zylinderkopfseitigen Ende 1a des Zylinders ist ein Zylinderkopf (nicht dargestellt) angeordnet. Der Zylinderkopf ist mit dem Zylinder in an sich bekannter Weise unter Zwischenfügung einer Zylinderkopfdichtung verbunden, insbesondere verschraubt. An einem zweiten, kurbeltriebseitigen Ende 1 b des Zylinders ist ein Kurbeltrieb, insbesondere ein Kurbelschlaufentrieb 32 angeordnet. Ein Teil des Kurbelschlaufentriebs 32 (ohne Kurbelwelle) mit einer mittigen Kurbelschlaufe 34 und zwei Kolben 33, die jeweils über eine Kolbenstange 35 mit der Kurbelschlaufe 34 verbunden sind, ist in Fig. 8 schematisch dargestellt. Der Zylinder ist an seinem zweiten Ende 1 b mit einem Gehäuseteil verbunden, der den Kurbeltrieb aufnimmt (nicht dargestellt).

Der hohlzylindrische Zylindermantel 1 weist eine Zylindermantelwandung 4 und eine Zylinderachse 5 auf. Die Zylindermantelwandung 4 weist eine zylindrische Mantelinnenffäche 4a und eine zylindrische Mantelaußenfläche 4a auf. Dabei ist der Zylindermantel 1 in den Fig. 1-3, 5-7 lediglich stark vereinfacht und idealisiert dargestellt und entspricht nicht der Wirklichkeit. Insbesondere muss die Mantelaußenfläche 4a nicht zylindrisch sein, sondern kann je nach Anforderung unterschiedlich gestaltet sein und z.B. Teil der Kolbenmaschine sein. Beispielsweise können innerhalb des Zylinders in an sich bekannter Weise außen um die Zylindermantelwandung 4 herum ein oder mehrere Hohlräume zur Bildung eines Wassermantels für die Zylindermantelkühlung vorgesehen sein, wobei der Zylindermantel 1 über Stege mit dem übrigen Zylinder verbunden ist. Der Zylindermantel 1 weist zweckmäßigerweise eine dem Zylinderkopf zugewandte, zylinderkopfseitige Zylinderstirnfläche 23 auf. Die Zylinderstirnfläche 23 ist vorzugsweise ebenflächig ausgebildet und erstreckt sich senkrecht zur Zylinderachse 5. Die Zylinderstirnfläche 23 dient als Flanschfläche zur Verschraubung mit dem Zylinderkopf. Die Zylinderstirnfläche 23 kann beispielsweise aber auch schräg ausgebildet sein und/oder profiliert sein und/oder eine Rille aufweisen, in der in Dichtungsring (O-Ring) angeordnet ist. Des Weiteren kann der erfindungsgemäße Zylinder als Einzelzylinder ausgebildet sein, wobei zweckmäßigerweise mehrere Einzelzylinder in einer Hubkolbenmaschine vorhanden sind. Alternativ dazu können mehrere erfindungsgemäße Zylinder in einem gemeinsamen Zylinderblock angeordnet sein.

Die Zylinderbohrung 2 weist eine kreiszylindrische Bohrungsfläche 6, die insbesondere von der Mantelinnenfläche 4a der Zylindermantelwandung 4 gebildet wird, und eine mittige Bohrungsachse 7 auf, die insbesondere koaxial zur Zylinderachse 5 ist. Insbesondere wird die Zylinderbohrung 2 in der Regel beim Gießen des Zylinders vorgesehen und die Bohrungsfläche 6 nach dem Gießen entsprechend nachbearbeitet. Zudem weist die Zylinderbohrung 2 ein erstes, zylinderkopfseitiges, dem Zylinderkopf zugewandtes Bohrungsende 2a und ein zweites, dem Zylinderkopf abgewandtes und dem Kurbeltrieb zugewandtes, kurbeltriebseitiges Bohrungsende 2b auf.

In der Zylindermantelwandung 4 sind im Bereich der Zylinderbohrung 2 außerdem in an sich bekannter Weise jeweils zumindest eine Zylindereinlassöffnung 37 (Figur 1), eine oder mehrere Überströmöffnungen 8 und eine oder mehrere durchgehende Zylinderauslassöffnungen 9 vorhanden, die jeweils mit einem Ein- bzw. Auslass- bzw. Überströmkanal (nicht dargestellt) in strömungstechnischer Verbindung stehen und bekanntermaßen als Gasdurchlässe bzw. Gasdurchlassöffnungen (z.B. für Frischluft und/oder Verbrennungsgas) für den Kreisprozess der nach dem 2-Takt-Prinzip arbeitenden Hubkolbenmaschine dienen. Die Anzahl, Lage und die Geometrie der Gasdurchlassöffnungen 8;9; 37 des Zylinders kann dabei je nach den jeweiligen Anforderungen variieren.

Der Zylinder, insbesondere die Zylindermantelwandung 4, besteht erfindungsgemäß aus metallischem Material bzw. Metall, insbesondere aus Grauguss, oder aus einer Leichtmetalllegierung, insbesondere einer Aluminiumlegierung, oder aus Kunststoff.

Die Zylinderlaufbuchse 3 ist ebenfalls hohlzylindrisch ausgebildet und weist eine Buchsenwandung 10 mit einer kreiszylindrischen Buchsenaußenfläche 11 und einer inneren, kreiszylindrischen Buchsenlauffläche 12 auf. Gemäß der Erfindung besteht die Zylinderlaufbuchse 3 zudem aus keramischem Material, insbesondere aus SiC (Siliciumcarbid) oder aus Si₃N₄ (Siliziumnitrid). Insbesondere besteht die Zylinderlaufbuchse 3 aus Si-Metall infiltriertem SiC (Si SiC) oder SiSiC-C (kohlenstoffhaltigem Siliciumcarbid) oder einem Verbundwerkstoff aus SiC und Graphit, bevorzugt aus SiC30, oder einem Verbundwerkstoff aus Si₃N₄ und Graphit. Vorteil der Graphit enthaltenden Materialien ist, dass Graphit als Schmiermittel wirkt. Infolgedessen werden im Rahmen der Erfindung bevorzugt keramische Verbundwerkstoffe für die Zylinderlaufbuchse 3 verwendet, die ein festes, insbesondere mineralisches, Schmiermittel enthalten, insbesondere mit diesem infiltriert sind, wobei auch andere Schmiermittel als Graphit in Betracht kommen, z.B. Molybdändisulfid MoS₂.

Die Buchsenlauffläche 12 dient in an sich bekannter Weise zur gleitenden Führung des Kolbens 33. Zudem weist die Zylinderlaufbuchse 3 eine Buchsenachse 13 auf, die insbesondere koaxial zur Bohrungsachse 7 ist. Des Weiteren weist die Zylinderlaufbuchse 3 eine erste, zylinderkopfseitige, dem Zylinderkopf zugewandte Buchsenstirnfläche 16 und eine zweite, dem Zylinderkopf abgewandte und dem Kurbeltrieb zugewandte, kurbeltriebseitige Buchsenstirnfläche 17 auf. Die beiden Buchsenstirnflächen 16;17 sind vorzugsweise jeweils ebenflächig ausgebildet und erstrecken sich jeweils senkrecht zur Buchsenachse 13. Zudem sind die beiden Buchsenstirnflächen 16;17 sich in axialer Richtung in Bezug zur Buchsenachse 13 gegenüberliegend angeordnet.

Außerdem sind in der Buchsenwandung 10 jeweils eine oder mehrere durchgehende Buchseneinlassöffnungen (nicht dargestellt), eine oder mehrere durchgehende Buchsenüberströmöffnungen 14 und eine oder mehrere durchgehende Buchsenauslassöffnungen 15 als Gasdurchlassöffnungen vorhanden. Die Anzahl, Lage und die Geometrie der Gasdurchlassöffnungen 14;15 der Zylinderlaufbuchse 3 ist dabei auf die Anzahl, Lage und die Geometrie der Gasdurchlassöffnungen 8;9 des Zylinders abgestimmt. Insbesondere ist die Zylinderlaufbuchse 3 derart in der Zylinderbohrung 2 angeordnet, dass die Buchseneinlassöffnungen mit den Zylindereinlassöffnungen 37 und die Buchsenauslassöffnungen 15 mit den Zylinderauslassöffnungen 9 und die Buchsenüberströmöffnungen 14 mit den Zylinderüberströmöffnungen 8 jeweils in radialer Richtung in Bezug zur Zylinderachse 5 fluchten (Fig. 3,5-7). Des Weiteren sind die Gasdurchlassöffnungen 14;15 der Zylinderlaufbuchse 3 vorzugsweise nicht als sich von der zweiten Buchsenstirnwandung 17 in die Buchsenwandung 10 hinein erstreckende Schlitze ausgeführt, sondern als Aussparungen, die vollständig von der Buchsenwandung 10 umschlossen sind. Dadurch wird an der zweiten Buchsenstirnwandung 17 ein umlaufender, geschlossener, ringförmiger Buchsenbund gebildet, der unter anderem die genaue Lagerung der Zylinderlaufbuchse 3 in dem Zylindermantel 1 fixiert. Insbesondere können auch von außen in radialer Richtung auf die Zylinderlaufbuchse 3 wirkende Kräfte im Bereich der zweiten Buchsenstirnwandung 17 und um die Buchsenöffnungen 14; 15 herum besser aufgenommen werden, ohne dass es zu hohen Spannungen und zum Brechen des verhältnismäßig spröden keramischen Materials kommt. Es ist aber beispielsweise möglich die Buchseneinlassöffnung als sich von der zweiten Buchsenstirnwandung 17 in die Buchsenwandung 10 hinein erstreckenden Schlitz auszuführen und die Buchsenauslassöffnung und die Buchsenüberströmöffnungen als vollständig von der Buchsenwandung 10 umschlossene Aussparungen bzw. Durchbrüche auszuführen.

Im Folgenden werden nun die unterschiedlichen erfindungsgemäßen Möglichkeiten der Lagerung der Zylinderlaufbuchse 3 in dem Zylindermantel 1 erläutert:
Gemäß einer ersten Ausführungsform der Erfindung ist die Zylinderlaufbuchse 3 in den Zylindermantel 1, insbesondere in die Zylinderbohrung 2 eingeklebt (Fig. 3). Dazu weist die Zylinderbohrung 2 jeweils ein Rechtsinnengewinde bzw. ein rechtssteigendes Innengewinde 18 und ein Linksinnengewinde bzw. ein linkssteigendes Innengewinde 19 auf. Die Gewinde 18;19 erstrecken sich dabei jeweils über die gesamte Zylindermantelwandung 4 bzw. Zylinderbohrung 2 in axialer Richtung gesehen.

Insbesondere handelt es sich bei den Gewinden 18;19 jeweils um ein Mehrgang-, bevorzugt ein 3-Gang-Gewinde. Es kann sich aber auch um ein 1-Gang-Gewinde handeln. Die beiden Gewinde 18;19 weisen dabei jeweils Gewindegänge 20;21 auf, wobei sich die Gewindegänge 20;21 der beiden Gewinde 18;19 gegenseitig kreuzen und schneiden. Dabei werden zwischen den Gewindegängen 20;21 jeweils einzelne Passflächen 22 gebildet, die in radialer Richtung der Zylinderachse 5 gesehen einen rautenartigen Umriss haben. Die Bohrungsfläche 6 wird also von den Gewindegängen 20;21 in mehrere Passflächen 22 unterteilt. Die Gewindegänge 20;21 sind jeweils von der Bohrungsfläche 6 bzw. der Mantelinnenfläche 4a her gesehen als Vertiefungen in der Zylindermantelwandung 4 ausgebildet.

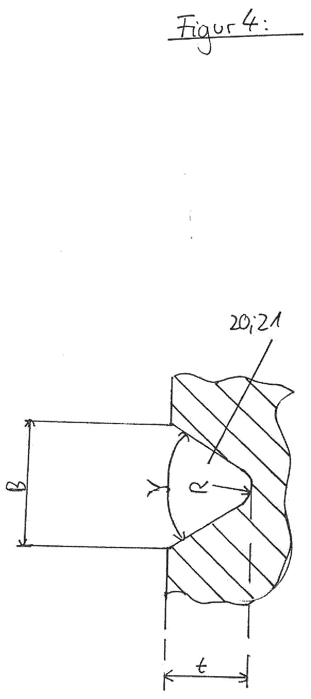

Zweckmäßigerweise weisen die beiden Gewinde 18;19 jeweils einen Steigungswinkel α;β auf, wobei vorzugsweise gilt: α;β < 90°. Bei den beiden Gewinden 18;19 kann es sich zudem beispielsweise jeweils um ein Rundgewinde, Sägegewinde, Spitzgewinde oder Flachgewinde handeln. Insbesondere handelt es sich um ein Spitzgewinde mit einem Flankenwinkel γ von bevorzugt 60° (Fig. 4).

Zudem sind die beiden Gewinde 18;19 hinsichtlich ihrer Geometrie, z.B. des Betrags ihrer Steigung, der Tiefe t, der Breite B, des Radius R des Bodens (Fig. 4), der Gangzahl etc. vorzugsweise gleich ausgebildet. Sie können aber auch unterschiedlich ausgebildet sein.

Des Weiteren entspricht der Durchmesser der Bohrungsfläche 6 zweckmäßigerweise dem Durchmesser der Buchsenaußenfläche 11.

Die Montage der Zylinderlaufbuchse 3 gemäß der ersten Ausführungsform der Erfindung erfolgt dabei folgendermaßen:
Zunächst wird ein Kleber auf die Bohrungsfläche 6 aufgetragen, so dass die gesamte Bohrungsfläche 6 mit Kleber bedeckt ist. Das heißt, alle Passflächen 22 werden mit Kleber bedeckt und die Gewindegänge 20;21 werden ebenfalls möglichst vollständig mit Kleber ausgefüllt. Dies erfolgt beispielsweise mittels eines Spachtels. Bei dem Kleber handelt es sich vorzugsweise um einen temperaturfesten Kleber, der bei hohen Temperaturen elastisch bleibt. Insbesondere handelt es sich um einen Zweikomponenten-Epoxidharzkleber, der insbesondere bei Raumtemperatur aushärtet.

Beim Einführen der Zylinderlaufbuchse 3 in die Zylinderbohrung 2 vom ersten Zylinderende 1a her, gleitet die Zylinderlaufbuchse 3 mit ihrer Buchsenaußenwandung 11 an der Bohrungsfläche 6, insbesondere an den Passflächen 22, entlang bzw. wird daran entlang geführt. Dabei wird der sich auf der Bohrungsfläche 6, insbesondere auf den Passflächen 22, befindliche Kleber von der Bohrungsfläche 6, insbesondere von den Passflächen 22, abgeschabt und vor der Zylinderlaufbuchse 3 her geschoben. Zudem wird der ins Innere des Zylindermantels 1 vorstehende Kleber von den Gewindegängen 20;21 abgezogen, wobei die Gewindegänge 20;21 aber befüllt bleiben. Aufgrund der Steigung der Gewindegänge 20;21 erfolgt das Abziehen dabei nach Art eines "ziehenden Schnittes". Dies gewährleistet besonders gut, dass der Kleber beim Einführen der Zylinderlaufbuchse 3 nicht von dem vor der Zylinderlaufbuchse 3 mitgeführten Kleber aus den Gewindegängen 20;21 heraus gerissen wird, sondern in die Gewindegänge 20;21 hinein gedrückt wird. Dadurch erfolgt eine bereichsweise Verklebung zwischen der Buchsenaußenfläche 11 und dem Zylindermantel 1 im Bereich der Gewindegänge 20;21. Im Bereich der Passflächen 22 hingegen ist die Buchsenaußenfläche 11 zweckmäßigerweise nicht mit der Bohrungsfläche 6 verklebt. In diesen Bereichen liegt die Buchsenaußenfläche 11 an der Bohrungsfläche 6 an, was eine genaue Lagerung und Zentrierung der Zylinderlaufbuchse 6 in der Zylinderbohrung 2 gewährleistet.

Die Zylinderlaufbuchse 3 wird dabei soweit eingeschoben, bis die erste Buchsenstirnfläche 16 bündig mit der ersten Zylinderstirnfläche 23 angeordnet ist.

Beim Einkleben der Zylinderlaufbuchse 3 ist von Vorteil, dass die unterschiedlichen Wärmeausdehnungskoeffizienten des metallischen Materials des Zylindermantels 1 und des keramischen Materials der Zylinderlaufbuchse 3 von dem Kleber ausgeglichen werden. Der Kleber hat also eine Pufferwirkung. Denn aufgrund der Elastizität des Klebers bzw. der Klebeverbindung können sich die beiden miteinander verbundenen Teile aufgrund der Temperaturbelastung im Betrieb einerseits in axialer Richtung unterschiedlich stark dehnen, ohne dass sich die Verbindung löst oder Spannungen in den Teilen entstehen. Andererseits wird auch die größere Dehnung des Zylindermantels 1 im Vergleich zur Zylinderlaufbuchse 3 in radialer Richtung von dem elastisch verformbaren Kleber überbrückt.

Somit gewährleistet das Kleben auch bei den üblichen hohen Betriebtemperaturen eine sichere, dauerhafte axial unverschiebliche und verdrehsichere Lagerung der Zylinderlaufbuchse 3 in dem Zylindermantel 1. Zudem stellen die Passflächen 22 eine passgenaue Anordnung der Zylinderlaufbuchse 3 in dem Zylindermantel 1 sicher und die mit Kleber gefüllten Gewindegänge 20;21 stellen eine dauerhafte Verklebung sicher. Dabei können anstelle des Rechts- und Linksgewindes 18;19 auch andere Vertiefungen als Klebetaschen zur Aufnahme des Klebers in die Zylinderwandung 4 von der Bohrungsfläche 6 her eingebracht sein, die vorzugsweise über die gesamte Zylinderwandung 4 bzw. Bohrungsfläche 6 verteilt angeordnet sind. Beispielsweise können mehrere umlaufende, sich in Umfangsrichtung erstreckende Rillen bzw. Nuten vorhanden sein, die in axialer Richtung übereinander angeordnet sind. Vorzugsweise erstrecken sich die Rillen jedoch mit einem Winkel ≠ 90° zur Zylinderachse 5 und somit schräg, also unter einem spitzen Winkel, zur zweiten Buchsenstirnfläche 17, um das beschriebene Abziehen des Klebers nach Art eines "ziehenden Schnittes" zu gewährleisten. Das heißt, die Rillen erstrecken sich jeweils wie die Gewindegänge 20;21 nicht nur in Umfangsrichtung, sondern gleichzeitig bzw. anteilig auch in axialer Richtung. Ihre Richtungsvektoren weisen also jeweils eine Komponente in axialer Richtung und eine Komponente in Umfangsrichtung des Zylindermantels 1 auf. Die Rillen müssen zudem nicht umlaufend sein. Alternativ können beispielsweise auch mehrere in Umfangsrichtung zueinander benachbart angeordnete Längsrillen vorhanden sein. Oder es kann lediglich ein Gewinde vorhanden sein.

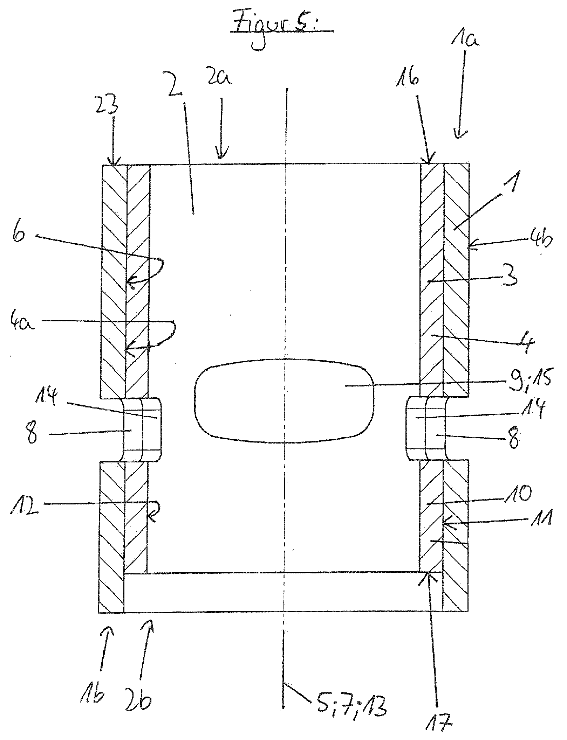

Gemäß einer weiteren Ausführungsform ist der Zylindermantel 1 auf die Zylinderlaufbuchse 3 aufgeschrumpft, so dass die Zylinderlaufbuchse 3 mit einer Presspassung in dem Zylindermantel 1 gelagert ist (Fig. 5-7). Das Aufschrumpfen erfolgt dabei z.B. durch Erwärmen des Zylinders auf ca. 200°C, Einsetzen der Raumtemperatur aufweisenden Zylinderlaufbuchse 3 vom ersten Zylinderende 1 a her in die Zylinderbohrung 2 und anschließendes Abkühlen des Zylinders. Presspassung bzw. Übermaßpassung bedeutet dabei, dass das Größtmaß des Durchmessers der Bohrungsfläche 6 in jedem Fall kleiner ist als das Kleinstmaß des Durchmessers der Buchsenaußenfläche 11.Das Aufschrumpfen eignet sich besonders gut bei einem Zylinder aus Grauguss, da dessen Wärmeausdehnungskoeffizient geringer ist als beispielsweise von Aluminium und dadurch auch bei höheren Temperaturen ein Lösen der Verbindung aufgrund der unterschiedlichen Wärmeausdehnungskoeffizienten von Zylinder und Zyünderfaufbuchse 3 vermieden wird.

Nicht Bestandteil der Erfindung, kann die Zylinderlaufbuchse 3 beispielsweise über ihre gesamte axiale Länge in die Zylinderbohrung 2 eingepresst sein (Fig. 4 und 5). Das heißt, es besteht eine Presspassung mit einem einzigen Passmaß zwischen der Bohrungsfläche 6 und der Buchsenaußenfläche 11 über die gesamte Länge der Zylinderlaufbuchse 3 in Richtung der Buchsenachse 13 gesehen.

Gemäß einer Ausführungsform schließt die erste Buchsenstirnfläche 16 dabei bündig mit der ersten Zylinderstirnfläche 23 ab und im Bereich der zweiten Buchsenstirnfläche 17 ist die Zylinderlaufbuchse 3 frei bzw. nicht abgestützt oder aufgelagert (Fig. 4). Insbesondere erstreckt sich die Zylinderbohrung 2 im Bereich der zweiten Buchsenstirnfläche 17 in axialer Richtung über die Zylinderlaufbuchse 3 hinaus.

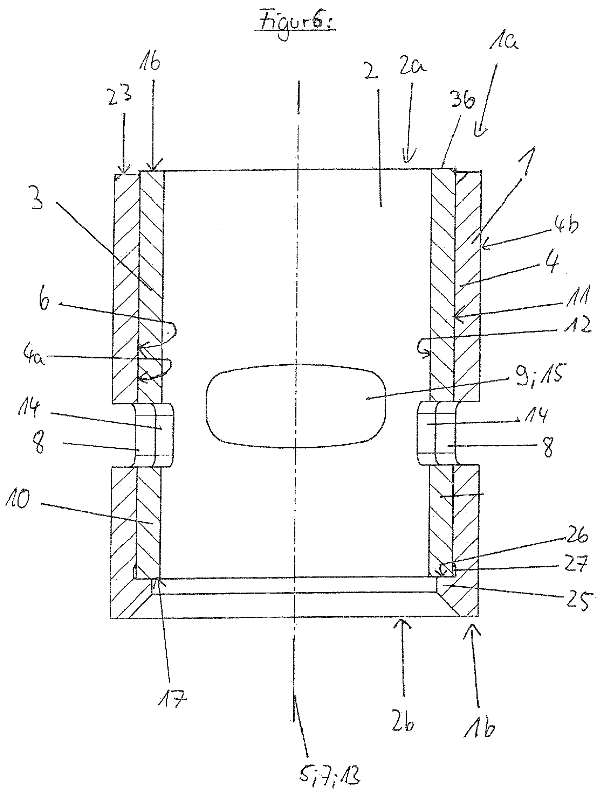

Gemäß einer weiteren Ausführungsform der Erfindung (Fig. 6) weist der Zylindermantel 1 zudem einen ringförmigen Auflagerabsatz bzw. Auflagerrand 25 auf, der von der Bohrungsfläche 6 radial nach innen, also auf die Bohrungsachse 7 zu, vorspringt. Insbesondere ist der Auflagerabsatz 25 an die Bohrungsfläche 6 angeformt. Der Auflagerabsatz 25 ist am bzw. benachbart zum zweiten Zylinderende 1 b bzw. zweiten Bohrungsende 2b angeordnet. Zudem weist der Auflagerabsatz 25 eine, insbesondere ebenflächige, Auflagefläche 26 auf, die senkrecht zur Zylinderachse 5 bzw. zur Bohrungsachse 7 ist. Die Auflagefläche 26 ist dem ersten Zylinderende 1a bzw. dem ersten Bohrungsende 2a zugewandt. Des Weiteren weist der Zylindermantel 1 vorzugsweise einen umlaufenden Freistich 27 auf, der in dem Eckbereich angeordnet ist, an dem die Auflagefläche 26 und die Bohrungsfläche 6 aneinander grenzen. Anstelle des Freistichs 27 oder zusätzlich kann z.B. auch ein Radius an der Außenkante der Zylinderlaufbuchse 3 im Bereich der zweiten Buchsenstirnfläche 17 vorhanden sein.

Die Montage bei der Ausführungsform mit dem Auflagerabsatz 25 erfolgt dabei analog zu der Montage ohne Auflagerabsatz 25. Der Auflagerabsatz 25 dient allerdings als axialer Anschlag bei der Montage. Das heißt, die Zylinderlaufbuchse 3 wird soweit in den Zylindermantel 1 eingeführt, bis die zweite Buchsenstirnfläche 17 an der Auflagefläche 26 anstößt und aufliegt. Der Freistich 27 stellt dabei sicher, dass die Zylinderlaufbuchse 3, insbesondere ohne zu Verkanten, bis zum Auflagerabsatz 25 problemlos eingeführt werden kann und die Buchsenstirnfläche 17 vollflächig auf der Auflagefläche 26 zu liegen kommt. Insbesondere ragt der Auflagerabsatz 25 dabei in radialer Richtung weniger weit in die Zylinderbohrung 2 hinein als die Zylinderlaufbuchse 3.

In der zusammengebauten Hubkolbenmaschine ist die Zylinderlaufbuchse 3 dann in axialer Richtung zwischen dem Auflagerabsatz 25, insbesondere der Auflagefläche 26, und dem Zylinderkopf, der unter Zwischenfügung einer Zylinderkopfdichtung mit dem Zylinder, verschraubt ist, fest eingespannt. Dadurch ist die Zylinderlaufbuchse 3 axial unverschieblich in der Zylinderbohrung 2 gelagert. Außerdem wird die Zylinderlaufbuchse 3 durch diese Verspannung aber auch noch zusätzlich gegen Verdrehen um die Buchsenachse 13 gesichert. Die elastisch verformbare Zylinderkopfdichtung gleicht dabei im Betrieb die unterschiedlichen Ausdehnungskoeffizienten des metallischen Zylindermantels 1 und der keramischen Zylinderlaufbuchse 3 aus.

Bei dieser Ausführungsform sind die Längen der Zylinderlaufbuchse 3 und der Bohrungsfläche 6 bis zum Auflagerabsatz 25 in axialer Richtung vorzugsweise zudem so bemessen und aufeinander abgestimmt, dass die Zylinderlaufbuchse 3 mit ihrer ersten Buchsenstirnfläche 16 geringfügig über den Zylindermantel 1, also über die zylinderkopfseitige Zylinderstirnwandung 23 übersteht. Durch diesen Überstand 36 wird die Einspannung der Zylinderlaufbuchse 3 verbessert.

Alternativ zu dem angeformten Auflagerabsatz 25 kann selbstverständlich auch beispielsweise ein Seegerring bzw. Sicherrungsring (nicht dargestellt) als Auflagerabsatz vorhanden sein, wobei der Sicherungsring in einer innenseitigen, umlaufenden Nut der Zylindermantelwandung 4 angeordnet ist. Der Sicherungsring ragt ebenfalls ins Innere des Zylindermantels 1 hinein und bildet eine Auflagefläche für die zweite Buchsenstirnfläche 17.

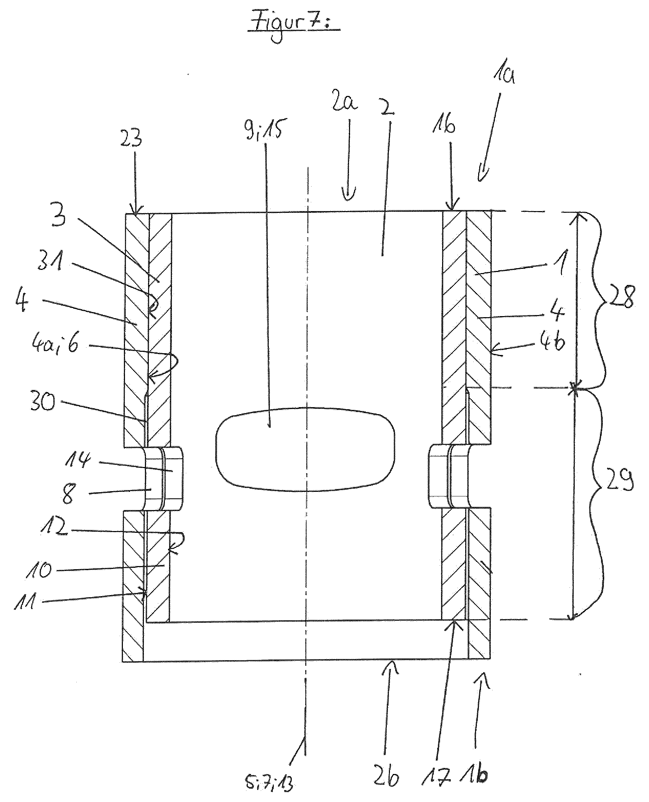

Gemäß der Erfindung ist die Zylinderlaufbuchse 3 nur über einen Teil ihrer Länge in die Zylinderbohrung 2 eingepresst (Fig.7). Das heißt, es besteht eine Presspassung mit einem einzigen Passmaß zwischen der Bohrungsfläche 6 und der Buchsenaußenfläche 11 nur über einen Teil der gesamten Länge der Zylinderlaufbuchse 3. Und der Zylindermantel 1 bzw. die Zylindermantelwandung 4 ist nur über einen Teil der gesamten Länge der Zylinderlaufbuchse 3 auf die Zylinderlaufbuchse 3 aufgeschrumpft.

Insbesondere besteht die Presspassung zwischen der Buchsenaußenfläche 11 und der Bohrungsfläche 6 in einem Aufschrumpfbereich bzw. einem Buchsenaußenflächenpassungsbereich 28, der sich zwischen der ersten, zylinderkopfseitigen Buchsenstirnfläche 16 und der ersten Buchsenauslassöffnung 15 in axialer Richtung von der zylinderkopfseitigen Buchsenstirnfläche 16 aus gesehen erstreckt. Insbesondere erstreckt sich der Buchsenaußenflächenpassungsbereich 28 von der zylinderkopfseitigen Zylinderstirnfläche 23 bis zur ersten Buchsenauslassöffnung 9 bzw. 15 in axialer Richtung von der zylinderkopfseitigen Buchsenstirnfläche 16 aus gesehen. Der Buchsenaußenflächenpassungsbereich 28 beginnt also, abhängig davon ob ein Überstand 36 vorhanden ist, bei der zylinderkopfseitigen Zylinderstirnfläche 23 oder bei der ersten Buchsenstirnfläche 16 und endet vorzugsweise im Abstand vor der ersten Buchsenauslassöffnung 15 in axialer Richtung von der ersten Buchsenstirnfläche 16 aus gesehen.

In einem presspassungsfreien Buchsenaußenflächenbereich 29 der Zylinderlaufbuchse 3, der sich an den Buchsenaußenflächenpassungsbereich 28 der Zylinderlaufbuchse 3 in axialer Richtung anschließt, ist die Buchsenaußenfläche 11 von der Bohrungsfläche 6 beabstandet. Zwischen Buchsenaußenfläche 11 und Bohrungsfläche 6 ist ein Ringspalt 30 vorhanden. Der presspassungsfreie Buchsenaußenflächenbereich 29 erstreckt sich dabei in axialer Richtung von dem Buchsenaußenflächenpassungsbereich 28 über die Ein-, Überstöm- und Auslassöffnungen 14;15 hinweg bis zur zweiten Buchsenstirnfläche 17 hin. Dadurch ist die Zylinderlaufbuchse 3 im Bereich der Ein-, Überstöm- und Auslassöffnungen 14;15 nicht eingespannt bzw. in die Zylinderbohrung 2 eingepasst, so dass keine Belastungen auf die Zylinderlaufbuchse 3 in diesem Bereich wirken. Insbesondere kann sich die Zylinderlaufbuchse 3 im freien Bereich 29 ungehindert, also unabhängig vom Zylindermantel 1, in radialer und axialer Richtung unter Temperaturbelastung verformen, also ausdehnen und zusammenziehen.

Realisiert wird diese Anordnung beispielsweise dadurch, dass der Durchmesser der Buchsenaußenfläche 11 über die gesamte Länge der Zylinderlaufbuchse 3 konstant ist. Die Zylinderbohrung 2 bzw. die Bohrungsfläche 6 weist in axialer Richtung von der ersten Zylinderstirnfläche 23 bzw. dem ersten Zylinderende 1 a aus gesehen zunächst, also im Buchsenaußenflächenpassungsbereich 28, eine Passfläche 31 auf. Der Durchmesser der Passfläche 31 entspricht dabei dem Durchmesser der Buchsenaußenfläche 11 mit dem vorgegebenen Untermaß für die Presspassung. Dadurch ist die Zylinderlaufbuchse 3 im Bereich der Passfläche 30 in die Zylinderbohrung 2 eingepresst. Die Passfläche 31 endet im oben beschriebenen vorbestimmten Abstand vor der ersten Buchsenauslassöffnung 15. Anschließend an die Passfläche 31 erweitert sich die Zylinderbohrung 2, so dass der Ringspalt 31 gebildet wird. Der Durchmesser der Bohrungsfläche 6 nach der Passfläche 31 ist also größer als der Durchmesser der Buchsenaußenfläche 11.

Alternativ dazu kann der Durchmesser der Bohrungsfläche 6 konstant sein und sich der Durchmesser der Buchsenaußenfläche 11 nach dem Passungsbereich 28 verringern, so dass der Ringsspalt 30 gebildet wird (nicht dargestellt). Oder sowohl der Durchmesser der Bohrungsfläche 6 vergrößert sich als auch der Durchmesser der Buchsenaußenfläche 11 nach dem Passungsbereich 28 verringert sich.

Des Weiteren kann die Presspassung anstelle oder zusätzlich in einem Bereich zwischen der zweiten Buchsenstirnfläche 17 und der ersten Gasdurchlassöffnung 14;15 der Zylinderlaufbuchse 3 in axialer Richtung von der zweiten Buchsenstirnfläche 17 her gesehen vorhanden sein, wenn keine der Gasdurchlassöffnungen 14; 15 der Zylinderlaufbuchse 3 als Schlitz ausgeführt ist.

Es muss erfindungsgemäß lediglich gewährleistet sein, dass sich der presspassungsfreie Buchsenaußenflächenbereich 29 in axialer Richtung von der zylinderkopfseitigen Buchsenstirnfläche 16 aus gesehen von dem Beginn der ersten Gasdurchlassöffnung der Zylinderlaufbuchse 3, welches üblicherweise eine Buchsenauslassöffnung 15 ist, bis zum Ende der letzten Gasdurchlassöffnung der Zylinderlaufbuchse 3, welches üblicherweise eine Buchseneinlassöffnung ist, erstreckt.

Nach einer weiteren Ausführungsform (nicht dargestellt) der Erfindung besteht die Zylinderlaufbuchse aus Keramik mit bestimmter Wärmeleitfähigkeit, bevorzugt SiC, insbesondere aus Si-Metall infiltriertem SiC, und ist in einer keramischen Lagerbuchse angeordnet, die aus Isolierkeramik besteht, also einem keramischen Material, dessen Wärmeleitfähigkeit geringer ist als die des Materials der Zylinderlaufbuchse. Z.B. besteht die Lagerbuchse aus Al₂O₃. Zur Montage wird die Zylinderlaufbuchse in die Lagerbuchse eingeschoben und anschließend die Lagerbuchse in an sich bekannter Weise in den metallischen Zylinder eingegossen. Bei Abkühlung des Zylinders zieht sich dieser zusammen, so dass die Lagerbuchse zusammengedrückt wird und dadurch die Zylinderlaufbuchse in die Lagerbuchse eingespannt bzw. eingepresst wird. Eine derartige Anordnung gewährleistet, dass die bei der Verbrennung entstehenden Temperaturen innerhalb des Zylinders belassen werden, da die Zylinderlaufbuchse von der Isolierkeramik umhüllt ist. Dies kann bei bestimmten Kraftstoffen vorteilhaft sein.

Die beschriebenen erfindungsgemäßen Ausführungsformen ermöglichen alle eine drehfeste und axial unverschiebliche Lagerung einer keramischen Zylinderlaufbuchse in einem metallischen Zylindermantel oder einem Zylindermantel aus Kunststoff. Zudem werden die Buchseninnenflächen 12 der Zylinderlaufbuchsen 3 vorzugsweise jeweils nach Einsetzen in den Zylindermantel 1 auf Maß geschliffen, da sich die Zylinderlaufbuchsen 3 bei der Montage verformen können.

Die erfindungsgemäßen Anordnungen sind dabei selbstverständlich nicht auf Hubkolbenverbrennungsmotoren bzw. Hubkolbenbrennkraftmaschinen beschränkt, sondern können auch bei Hubkolbenkompressoren oder Hubkolbenpumpen oder eingesetzt werden. Außerdem sind die Anordnungen nicht auf 2-Takt Motoren beschränkt, sondern können auch bei 4-Takt-Motoren, dann ohne Ein-, Überström- und Auslassöffnungen in der Zylinderlaufbuchse und dem Zylindermantel, eingesetzt werden.

Besonders vorteilhaft werden die beschriebenen erfindungsgemäßen Anordnungen allerdings bei Maschinen mit Kurbelschlaufentrieb, insbesondere bei Kurbelschlaufenmotoren eingesetzt, da bei diesen keine Kippkräfte auf die Zylinderlaufbuchsen wirken.

Im Rahmen der Erfindung liegt es selbstverständlich auch, bei der Ausführungsform der eingeklebten Zylinderlaufbuchse 3 bzw. der nur teilweise eingepressten Zylinderlaufbuchse 3 den Auflagerabsatz 25 bzw. den Sicherungsring vorzusehen. Zudem kann auch bei diesen Ausführungsformen, die Zylinderlaufbuchse 3 so bemessen sein, dass sie in axialer Richtung über die Zylinderwandung 4, insbesondere die Zylinderstirnfläche 23, übersteht, um die axiale Einspannung zu gewährleisten. Außerdem können die für die Aufnahme des Klebers vorhandenen Vertiefungen, insbesondere die Gewinde 20;21 sich auch lediglich nur über einen dem Passungsbereich 28 entsprechenden Bereich erstrecken, so dass eine Verklebung nur in diesem Bereich erfolgt.

## Patentansprüche

1. Zylinder aus metallischem Material oder aus Kunststoff für eine nach dem 2-Takt-Prinzip arbeitende Hubkolbenmaschine mit Kurbeltrieb, insbesondere mit Kurbelschlaufentrieb, mit zumindest einem eine Zylinderbohrung (2) aufweisenden Zylindermantel (1) sowie zumindest einer in der Zylinderbohrung (2) gelagerten Zylinderlaufbuchse (3) aus keramischem Material, die eine Buchsenachse (13) und eine zylinderkopfseitige Buchsenstirnfläche (16) aufweist, wobei der Zylindermantel (1) zumindest zwei Gasdurchlassöffnungen (8;9;37), insbesondere zumindest eine Zylindereinlassöffnung (37) und eine Zylinderauslassöffnung (9), aufweist und die Zylinderlaufbuchse (3) zumindest zwei Gasdurchlassöffnungen (14; 15), insbesondere zumindest eine Buchseneinlassöffnung und eine Buchsenauslassöffnung (15), aufweist, und wobei eine Presspassung zwischen einer Bohrungsfläche (6) der Zylinderbohrung (2) und einer Buchsenaußenfläche (11) der Zylinderlaufbuchse (3) vorhanden ist, **dadurch gekennzeichnet, dass** ein presspassungsfreier Buchsenaußenflächenbereich (29) vorhanden ist, der sich in axialer Richtung von der zylinderkopfseitigen Buchsenstirnfläche (16) aus gesehen von der ersten Gasdurchlassöffnung (14;15) der Zylinderlaufbuchse (3) bis zur letzten Gasdurchlassöffnung (14;15) der Zylinderlaufbuchse (3) erstreckt.

2. Zylinder nach Anspruch 1, **dadurch gekennzeichnet, dass** die Presspassung nur in einem Buchsenaußenflächenpassungsbereich (28) vorhanden ist, der sich in axialer Richtung gesehen von der zylinderkopfseitigen Buchsenstirnfläche (16) aus gesehen zwischen der zylinderkopfseitigen Buchsenstirnfläche (16) und der ersten Gasdurchlassöffnung (14; 15) der Zylinderlaufbuchse (3) erstreckt.

3. Zylinder nach Anspruch 2, **dadurch gekennzeichnet, dass** die Buchsenaußenfläche (11) in dem presspassungsfreien Buchsenaußenflächenbereich (29) von der Bohrungsfläche (6) beabstandet ist.

4. Zylinder nach einem der vorhergehenden Ansprüche, **dadurch gekennzeichnet, dass** in dem presspassungsfreien Buchsenaußenflächenbereich (29) zwischen der Buchsenaußenfläche (11) und der Bohrungsfläche (6) ein Ringspalt (30) vorhanden ist.

5. Zylinder nach einem der vorangegangen Ansprüche, **dadurch gekennzeichnet, dass** der Zylindermantel (1) einen ringförmigen Auflagerabsatz (25) aufweist der von der Bohrungsfläche (6) radial nach innen vorspringt und auf dem die Zylinderlaufbuchse (3) mit ihrer kurbeltriebseitigen Buchsenstirnfläche (17) gelagert ist.

6. Zylinder nach Anspruch 5, **dadurch gekennzeichnet, dass** der Auflagerabsatz (25) an die Bohrungsfläche (6) angeformt ist.

7. Hubkolbenmaschine, insbesondere Hubkolbenmotor, mit Kurbeltrieb, insbesondere mit Kurbelschlaufentrieb, und einem Zylinderkopf, **gekennzeichnet durch** einen Zylinder nach einem der vorhergehenden Ansprüche 1 bis 6.

8. Hubkolbenmaschine nach Anspruch 7, **dadurch gekennzeichnet, dass** die Zylinderlaufbuchse (3) in axialer Richtung zwischen dem Auflagerabsatz (25) und dem Zylinderkopf, der unter Zwischenfügung einer Zylinderkopfdichtung mit dem Zylinder verschraubt ist, eingespannt ist.

## Claims

1. A cylinder made of metallic material or plastic for a reciprocating piston machine that operates according to the 2-stroke principle, having a crank mechanism, in particular a Scotch yoke mechanism, with at least one cylinder envelope (1) having a cylinder bore (2) and with at least one cylinder liner (3) composed of ceramic material supported in the cylinder bore (2), which liner has a liner axis (13) and a liner end surface (16) at the cylinder head end; the cylinder envelope (1) has at least two gas openings (8; 9; 37), in particular at least one cylinder inlet opening (37) and one cylinder outlet opening (9), and the cylinder liner (3) has at least two gas openings (14; 15), in particular at least one liner inlet opening and one liner outlet opening (15); and a press fit is provided between a bore surface (6) of the cylinder bore (2) and an outer liner surface (11) of the cylinder liner (3), **characterized in that** a press-fit-free outer liner surface region (29) is provided, which, viewed in the axial direction from the liner end surface (16) at the cylinder head end, extends from the first gas opening (14; 15) of the cylinder liner (3) to the last gas opening (14; 15) of the cylinder line (3).

2. The cylinder according to claim 1, **characterized in that** the press fit is only provided in an outer liner surface fitting region (28), which, viewed in the axial direction from the liner end surface (16) at the cylinder head end, extends between the liner end surface (16) at the cylinder head end and the first gas opening (14; 15) of the cylinder liner (3).

3. The cylinder according to claim 2, **characterized in that** in the press-fit-free outer liner surface region (29), the outer liner surface (11) is spaced apart from the bore surface (6).

4. The cylinder according to one of the preceding claims, **characterized in that** in the press-fit-free outer liner surface region (29), there is an annular gap (30) between the outer liner surface (11) and the bore surface (6).

5. The cylinder according to one of the preceding claims, **characterized in that** the cylinder envelope (1) has an annular support shoulder (25), which protrudes radially inward from the bore surface (6) and against which the cylinder liner (3) rests with its liner end surface (17) oriented toward the crank mechanism.

6. The cylinder according to claim 5, **characterized in that** the support shoulder (25) is formed onto the bore surface (6).

7. A reciprocating piston machine, in particular a reciprocating piston engine, having a crank mechanism, in particular a Scotch yoke mechanism, and having a cylinder head, **characterized by** means of a cylinder according to one of the preceding claims 1 through 6.

8. The reciprocating piston machine according to claim 7, **characterized in that** the cylinder liner (3) is clamped in the axial direction between the support shoulder (25) and the cylinder head, which is screwed to the cylinder with the interposition of a cylinder head seal.

## Revendications

1. Cylindre en matériau métallique ou en matière plastique pour un moteur à piston alternatif comportant une transmission à bielle, notamment une transmission à bielle en boucle, qui fonctionne selon le principe à deux temps, présentant au moins une chemise de cylindre (1) munie d'un alésage de cylindre (2) ainsi qu'au moins une douille de glissement de cylindre (3) en matériau céramique montée dans l'alésage de cylindre (2), qui présente un axe de douille (13) et une surface frontale de douille (16) côté culasse, la chemise de cylindre (1) présentant au moins deux ouvertures de passage de gaz (8 ; 9 ; 37), en particulier au moins une ouverture d'entrée de cylindre (37) et une ouverture de sortie de cylindre (9), et la douille de glissement de cylindre (3) présentant au moins deux ouvertures de passage de gaz (14 ; 15), en particulier au moins une ouverture d'entrée de douille et une ouverture de sortie de douille (15), un ajustement serré existant entre une surface d'alésage (6) de l'alésage de cylindre (2) et une surface extérieure de douille (11) de la douille de glissement de cylindre (3), **caractérisé en ce qu'**il existe une zone de surface extérieure de douille (29), exempte d'ajustement serré, qui, vue en direction axiale depuis la surface frontale de douille (16) côté culasse, s'étend depuis la première ouverture de passage de gaz (14 ; 15) de la douille de glissement de cylindre (3) jusqu'à la dernière ouverture de passage de gaz (14 ; 15) de la douille de glissement de cylindre (3).

2. Cylindre selon la revendication 1, **caractérisé en ce que** l'ajustement serré n'existe que dans une zone d'ajustement de surface extérieure de douille (28) qui, vue en direction axiale depuis la surface frontale de douille (16) côté culasse, s'étend entre la surface frontale de douille (16) côté culasse et la première ouverture de passage de gaz (14 ; 15) de la douille de glissement de cylindre (3).

3. Cylindre selon la revendication 2, **caractérisé en ce que** la surface extérieure de douille (11) est écartée de la surface d'alésage (6) dans la zone de surface extérieure de douille (29) exempte d'ajustement serré.

4. Cylindre selon l'une des revendications précédentes, **caractérisé en ce qu'**il existe un intervalle annulaire (30) dans la zone de surface extérieure de douille (29) exempte d'ajustement serré, entre la surface extérieure de douille (11) et la surface d'alésage (6).

5. Cylindre selon l'une des revendications précédentes, **caractérisé en ce que** la chemise de cylindre (1) comprend un épaulement d'appui annulaire (25) qui fait saillie de la surface d'alésage (6) radialement vers l'intérieur et sur lequel vient s'appuyer la douille de glissement de cylindre (3) par sa surface frontale de douille (17) côté transmission à bielle.

6. Cylindre selon la revendication 5, **caractérisé en ce que** l'épaulement d'appui (25) est moulé sur la surface d'alésage (6).

7. Moteur à piston alternatif, en particulier moteur à piston alternatif comportant une transmission à bielle, notamment une transmission à bielle en boucle, et une culasse, **caractérisé par** un cylindre selon l'une des revendications précédentes 1 à 6.

8. Moteur à piston alternatif selon la revendication 7, **caractérisé en ce que** la douille de glissement de cylindre (3) est serrée en direction axiale entre l'épaulement d'appui (25) et la culasse qui est fixée par vissage sur le cylindre avec interposition d'un joint de culasse.
